# EUROPEAN PATENT APPLICATION

(11) **EP 4 561 174 A1**
(43) Date of publication of application: **28.05.2025**
(21) Application number: 22951920.2
(22) Date of filing: 19.07.2022
(51) Int. Cl.: H04W 36/08, H04W 4/42, H04W 36/30, H04W 84/00

(54) **COMMUNICATION QUALITY-BASED TRANSITION OF COMMUNICATION DEVICE FROM MOBILE STATION TO NEARBY BASE STATION**

(71) Applicant: Rakuten Mobile, Inc., Tokyo 158-0094 (JP)
(72) Inventor: AOYAGI Kenichiro, Tokyo 158-0094 (JP); KITAGAWA Koichiro, Tokyo 158-0094 (JP); SHETE Pankaj, Tokyo 158-0094 (JP); MUHAMMAD Awn, Tokyo 158-0094 (JP)
(74) Representative: Betten & Resch
(86) International application number: PCT/JP2022/028070
(87) International publication number: WO 2024/018531

(57) **Abstract**

A communication control apparatus includes at least one processor that performs: by a communication cell identification unit, identifying a surrounding communication cell where a moving station capable of communicating with a communication device is located; by a communication quality insufficiency estimation unit, estimating insufficiency of communication quality of a communication device currently connected to the moving station; and by a connection control unit, connecting the communication device whose communication quality is estimated to be insufficient, to a surrounding base station providing the surrounding communication cell. The moving station includes a communication-device functional unit that functions as a communication device to the surrounding base station, and a base-station functional unit that functions as a base station to a communication device with which the moving station can communicate.

## Description

### BACKGROUND OF THE INVENTION

### 1. Field of the Invention

The present disclosure relates to transfer of communication device from moving station to surrounding base station based on communication quality.

### 2. Description of the Related Art

The number, types, and applications of wireless communication devices, represented by smartphones and Internet of Things (IoT) devices, continue to increase, and wireless communication standards continue to be expanded and improved. For example, the commercial service of the fifth generation mobile communication system known as "5G" started in 2018, and the standards are still being developed by the 3GPP (Third Generation Partnership Project). Efforts are also underway to develop standards for "6G" or the sixth generation mobile communication system, which would be the next generation of wireless communication standards following 5G.

Mobile communication networks for portable communication devices such as smartphones and cell phones (hereinafter collectively referred to as communication device(s)) are usually constructed by communication cells (hereinafter referred to as terrestrial communication cell(s) or fixed communication cell(s)) provided by base stations statically installed on the ground (hereinafter referred to as terrestrial base station(s) or fixed base station(s)). However, mobile communication cannot be performed outside fixed communication cells, and the quality of mobile communications might be low depending on time and/or place even within fixed communication cells.

To solve these issues, moving stations are being considered to supplement the fixed communication cells provided by the fixed base stations. Possible moving stations are assumed to be something like a communication satellite that itself functions as a base station (hereinafter referred to as a moving base station) or something like a repeater that communicates with an existing fixed base station or moving base station to expand an existing communication cell (hereinafter referred to as a relay station).
Patent Literature 1: JP-A-2006-352894

### SUMMARY OF THE INVENTION

If a moving station is installed to a movable object such as a train or a bus, it is assumed that the communication devices used by the passengers and others will communicate mainly through the moving station. However, there is a risk that sufficient communication quality may not be realized depending on the movement state and the like of the moving station.

The present disclosure was made in consideration of this situation, and its purpose is to provide a communication control apparatus and the like that can realize sufficient communication quality by supplementing the moving station.

In order to solve the above issue, a communication control apparatus in a certain aspect of the present disclosure includes at least one processor that performs: by a communication cell identification unit, identifying a surrounding communication cell where a moving station capable of communicating with a communication device is located; by a communication quality insufficiency estimation unit, estimating insufficiency of communication quality of a communication device currently connected to the moving station; and by a connection control unit, connecting the communication device whose communication quality is estimated to be insufficient, to a surrounding base station providing the surrounding communication cell.

According to this aspect, the communication device whose communication quality is estimated to be insufficient via the moving station, is connected in advance to the surrounding base station around the moving station. Therefore, the communication device can enjoy sufficient communication quality via the surrounding base station even in a situation where the communication quality is insufficient with the moving station.

Another aspect of the present disclosure is a communication control method. The method includes: identifying a surrounding communication cell where a moving station capable of communicating with a communication device is located; estimating insufficiency of communication quality of a communication device currently connected to the moving station; and connecting the communication device whose communication quality is estimated to be insufficient, to a surrounding base station providing the surrounding communication cell.

Further another aspect of the present disclosure is a computer-readable medium. The computer-readable medium stores a communication control program causing a computer to perform: identifying a surrounding communication cell where a moving station capable of communicating with a communication device is located; estimating insufficiency of communication quality of a communication device currently connected to the moving station; and connecting the communication device whose communication quality is estimated to be insufficient, to a surrounding base station providing the surrounding communication cell.

In addition, any combination of the above components, and any conversion of the expression of the present disclosure among methods, devices, systems, recording media, computer programs and the like are also encompassed within this disclosure.

According to the present disclosure, sufficient communication quality can be realized by supplementing the moving station.

### BRIEF DESCRIPTION OF THE DRAWINGS

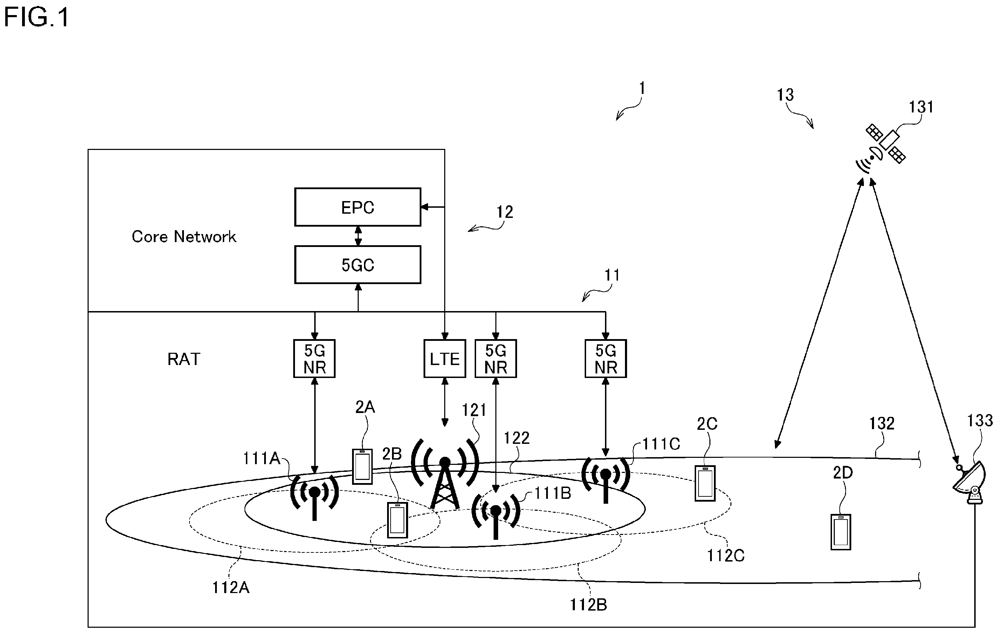

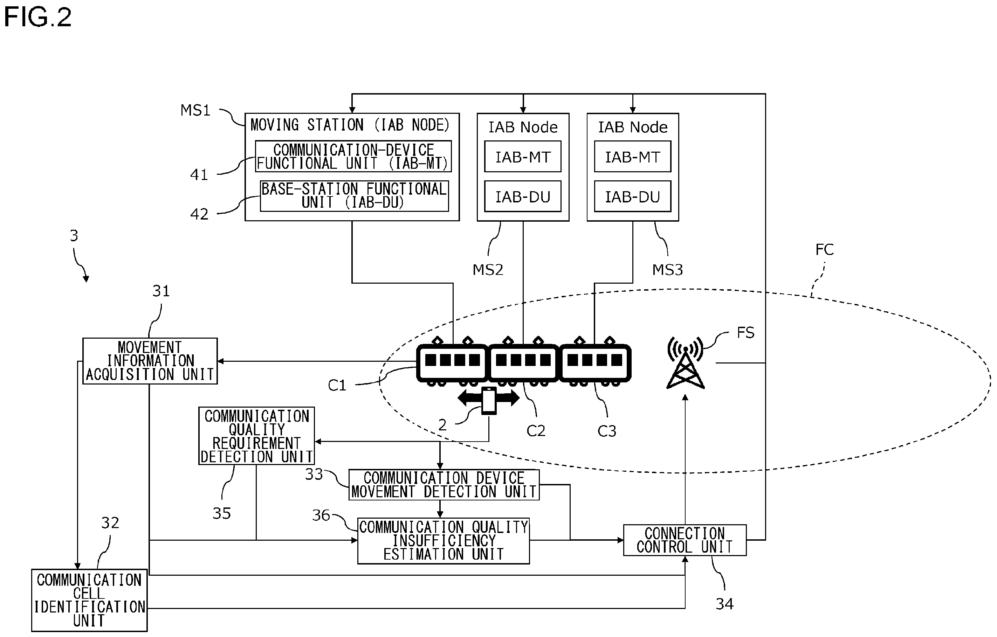

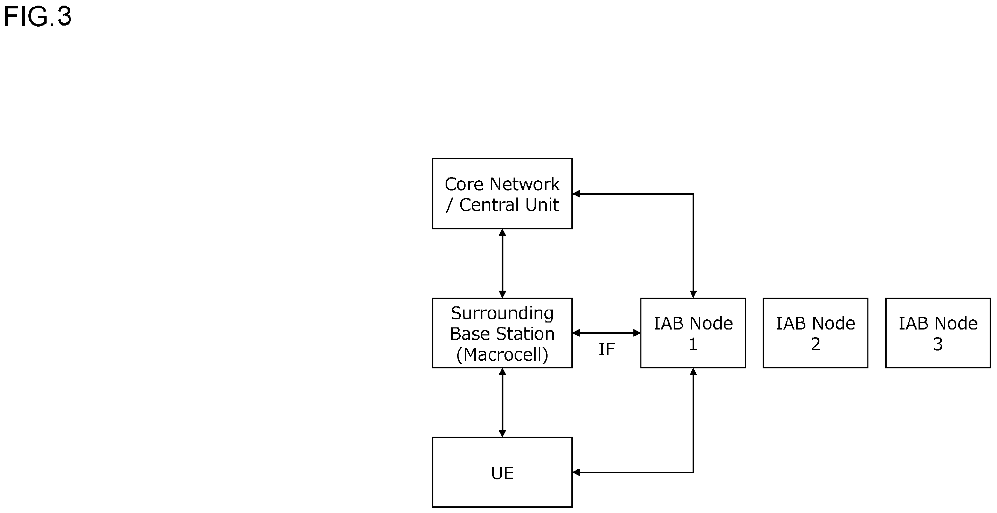

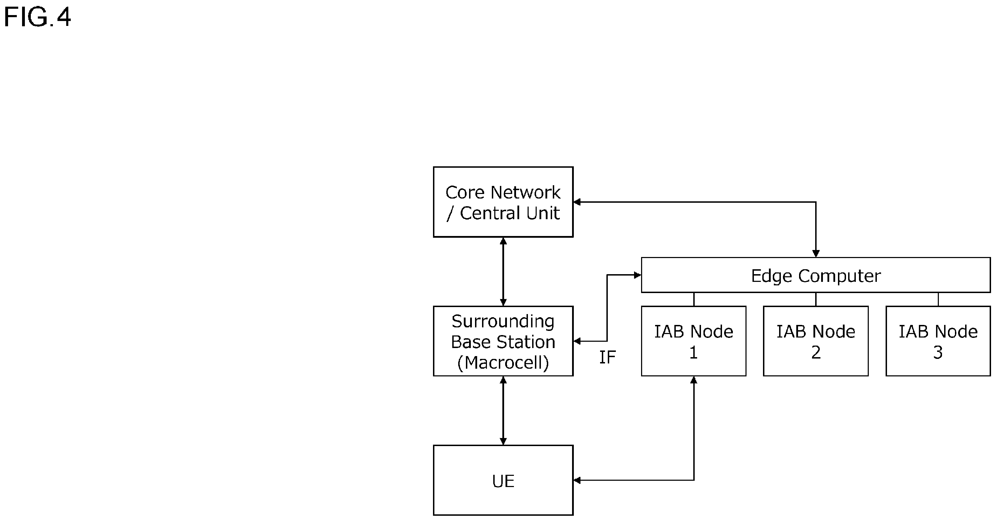

Figure 1 schematically shows the overview of a wireless communication system to which the communication control apparatus is applied. Figure 2 is a functional block diagram of the communication control apparatus. Figure 3 schematically shows an example where a communication device is dually connected to both a surrounding base station and a moving station by the DC. Figure 4 schematically shows an example of an edge computer installed to a train, controlling a plurality of moving stations installed to a plurality of cars of the train.

### DETAILED DESCRIPTION OF THE INVENTION

Figure 1 schematically shows an overview of a wireless communication system 1 to which the communication control apparatus according to an embodiment of the present disclosure is applied. The wireless communication system 1 includes 5G wireless communication system 11, 4G wireless communication system 12, and satellite communication system 13. 5G wireless communication system 11 that complies with the fifth generation mobile communication system (5G) uses NR (New Radio) or 5G NR (Fifth Generation New Radio) as the radio access technology (RAT) and 5GC (Fifth Generation Core) as the core network. 4G wireless communication system 12 that complies with the fourth generation mobile communication system (4G) uses LTE (Long Term Evolution) or LTE-Advanced as the radio access technology and EPC (Evolved Packet Core) as the core network. Satellite communication system 13 is for satellite communication via communication satellite 131. Although not shown in the figure, the wireless communication system 1 may include wireless communication networks of a generation prior to 4G, a generation later than 5G (e.g., 6G), or any wireless communication networks that are not associated with generations, such as Wi-Fi (registered trademark).

The 5G wireless communication system 11 may include a plurality of 5G base stations 111A, 111B, and 111C (hereinafter collectively referred to as 5G base station 111) installed on the ground capable of communicating by 5G NR with communication devices or communication devices 2A, 2B, 2C, and 2D (hereinafter collectively referred to as communication device(s) 2) such as smartphones, which are also referred to as UE (User Equipment). 5G base station 111 is also referred to as gNodeB (gNB). The coverage or support range of each 5G base station 111A, 111B and 111C is referred to as a cell 112A, 112B and 112C (hereinafter collectively referred to as 5G cell 112).

The size of the 5G cell 112 of each 5G base station 111 is arbitrary, but typically ranges from a few meters to several tens of kilometers in radius. Although there is no established definition, cells with a radius of a few meters to ten meters are called femtocells, cells with a radius of ten meters to several tens of meters are called picocells, cells with a radius of several tens of meters to several hundred meters are called microcells, and cells with a radius of more than several hundreds of meters are called macrocells. In 5G, high frequency radio waves such as millimeter waves are often used, and their high tendency to propagate in a straight-line causes radio waves to be blocked by obstacles, shortening the communication distance. For this reason, 5G tends to use more small cells than 4G and earlier generations.

The communication device 2 can conduct 5G communication when it is located within at least one of a plurality of 5G cells 112A, 112B and 112C. In the example shown in the figure, communication device 2B in 5G cells 112A and 112B can communicate with both 5G base stations 111A and 111B by 5G NR. In addition, the communication device 2C in the 5G cell 112C can communicate with the 5G base station 111C by 5G NR. Communication device 2A and 2D are outside of all 5G cells 112A, 112B and 112C, so they are not able to communicate by 5G NR. The 5G NR-based 5G communication between each communication device 2 and each 5G base station 111 is managed by the 5GC, which is the core network. For example, the 5GC transfers data to and from each 5G base station 111, transfers data to and from external networks such as the EPC, the satellite communication system 13 and the Internet, and manages the movement of the communication device 2.

The 4G wireless communication system 12 comprises a plurality of 4G base stations 121 (only one of them is shown in Figure 1) installed on the ground that can communicate with the communication device 2 by LTE or LTE-Advanced. The base station 121 in 4G is referred to as eNodeB (eNB). Similar to each 5G base station 111, the communication range or support range of each 4G base station 121 is also called a cell and is shown as 122.

The communication device 2 can conduct 4G communication when it is located within 4G cell 122. In the example shown in the figure, the communication devices 2A and 2B in the 4G cell 122 can communicate with the 4G base station 121 by LTE or LTE-Advanced. Communication device 2C and 2D are outside the 4G cell 122 and are not able to communicate by LTE or LTE-Advanced. The 4G communication by LTE and LTE-Advanced between each communication device 2 and each 4G base station 121 is managed by the EPC, which is the core network. For example, the EPC manages the transfer of data to and from each 4G base station 121, the transfer of data to and from external networks such as 5GC, the satellite communication system 13 and the Internet, and the movement management of the communication device 2.

If we take a look at each communication device 2A, 2B, 2C and 2D in the example shown in the figure, the communication device 2A is in a state that enables 4G communication with 4G base station 121, and communication device 2B is in a state that enables 5G communication with 5G base stations 111A and 111B and 4G communication with 4G base station 121, and communication device 2C is in a state that enables 5G communication with 5G base station 111C. When there are multiple base stations (111A, 111B and 121) as in the case of communication device 2B, one base station is selected as the most suitable for the communication device 2B in terms of communication quality and the like., under the control of the 5GC and/or the EPC, which is the core network. For the communication device 2D that is not in a state that enables 5G communication with any 5G base station 111 or 4G communication with any 4G base station 121, the communication is conducted using the satellite communication system 13 described below.

The satellite communication system 13 is the wireless communication system using communication satellites 131 as non-terrestrial base stations. The communication satellites 131 are low-earth-orbit satellites flying in low-earth-orbit outer space of 500 to 700 km above the ground. Similar to 5G base station 111 and 4G base station 121, the communication range or support range of each communication satellite 131 is also called a cell and is shown as 132. Thus, a communication satellite 131 as a non-terrestrial base station provides a satellite communication cell 132 as a non-terrestrial communication cell onto the ground. Communication device 2 on the ground can conduct satellite communication when it is inside the satellite communication cell 132. Similar to 5G base station 111 in the 5G wireless communication system 11 and 4G base station 121 in the 4G wireless communication system 12, communication satellite 131 as the base station in the satellite communication system 13 is capable of wireless communication directly or indirectly via aircraft and the like. with the communication device 2 within the satellite communication cell 132. The radio access technology used by the communication satellite 131 for wireless communication with the communication device 2 in the satellite communication cell 132 may be 5G NR, the same as the 5G base station 111, or LTE or LTE-Advanced, the same as the 4G base station 121, or any other radio access technology that the communication device 2 can use. Therefore, there is no need for the communication device 2 to have any special functions or components for satellite communication.

The satellite communication system 13 is equipped with a gateway 133 as a ground station that is installed on the ground and can communicate with the communication satellite 131. The gateway 133 is equipped with a satellite antenna to communicate with the communication satellite 131, and is connected to the 5G base station 111 and the 4G base station 121 as terrestrial base stations that constitute the terrestrial network (TN). In this way, the gateway 133 connects the non-terrestrial network (NTN), which is comprising communication satellites 131 as a non-terrestrial base station or a satellite base station, and the terrestrial network TN, which is comprising terrestrial base stations 111 and 121, for mutual communication. When the communication satellite 131 conducts 5G communication with the communication device 2 in the satellite communication cell 132 by 5G NR, the 5GC connected via the gateway 133 and the 5G base station 111 in the TN (or the 5G radio access network) is used as the core network. When the communication satellite 131 conducts 4G communication with the communication device 2 in the satellite communication cell 132 by LTE or LTE-Advanced, the EPC connected via the gateway 133 and the 4G base station 121 in the TN (or the 4G radio access network) is used as the core network. In this way, appropriate coordination is made between different wireless communication systems such as 5G wireless communication system 11, 4G wireless communication system 12, satellite communication system 13 and the like. through the gateway 133.

Satellite communication by communication satellites 131 is mainly used for covering areas with no or few terrestrial base stations such as 5G base stations 111 and 4G base stations 121 and the like. In the example shown in the figure, a communication device 2D that is outside the communication cells of all the terrestrial base stations communicates with the communication satellite 131. On the other hand, communication devices 2A, 2B and 2C that are in good communication with either of the terrestrial base stations, are also in the satellite communication cell 132 and can communicate with the communication satellite 131. However, by communicating with the terrestrial base stations instead of the communication satellite 131 as the satellite base station in principle, the limited communication resources (including power) of the communication satellite 131 are saved for the communication device 2D and the like. The communication satellite 131 uses beamforming to direct the communication signal to the communication device 2D in the satellite communication cell 132, thereby the communication quality with the communication device 2D is improved.

The size of the satellite communication cell 132 of the communication satellite 131 as a satellite base station depends on the number of beams emitted by the communication satellite 131. For example, a satellite communication cell 132 with a diameter of about 24 km can be formed by combining up to 2,800 beams. As illustrated, a satellite communication cell 132 is typically larger than a terrestrial communication cell such as a 5G cell 112 or a 4G cell 122, and could contain one or more 5G cells 112 and/or 4G cells 122 inside it. The above example shows a communication satellite 131 flying in low-earth-orbit outer space at a height of about 500 km to 700 km above the ground as a flying non-terrestrial base station. However, a communication satellite flying in geostationary orbit or other higher orbit in outer space, or an unmanned or manned aircraft flying in stratosphere or other lower (e.g., about 20 km above the ground) atmosphere may be used as a non-terrestrial base station in addition to or instead of the communication satellite 131.

As shown in Figure 1, the wireless communication system 1 is usually constructed by the terrestrial communication cells 112, 122 (hereinafter referred to as fixed communication cells FC) provided by terrestrial base stations 111, 121 stationarily installed on the ground (hereinafter referred to as fixed base stations FS). However, mobile communication cannot be performed outside fixed communication cells FC, and the quality of mobile communications might be low depending on time and/or place even within fixed communication cells FC. Although the wireless communication system 1 can also include the satellite communication system 13 that uses the communication satellite 131 as a non-terrestrial base station or moving base station, it is impractical to supplement the terrestrial network of terrestrial base stations 111, 121 solely by the communication satellites 131.

To solve these issues, as schematically shown in Figure 2, moving stations MS are preferably introduced to supplement the fixed communication cells FC provided by the fixed base stations FS (and/or the satellite communication cell 132 provided by the communication satellite 131 (not shown). Examples of moving stations MS include a moving base station such as the communication satellite 131 that itself functions as a base station and something like a repeater that communicates with an existing fixed base station FS or the communication satellite 131 (moving base station) to expand an existing fixed communication cell FC or the satellite communication cell 132 (hereinafter referred to as a relay station). The moving station MS in the example in Figure 2 is an IAB (Integrated Access and Backhaul) node.

IAB is a technology specified in 5G to expand a communication cell of a parent node, utilizing wireless backhaul between a base station that serves as an IAB donor (parent node) and an IAB node (child node) and/or between parent and child IAB nodes (where an IAB node closer to the IAB donor is the parent node, and an IAB node far from the IAB donor is the child node). Here, "expansion of a communication cell" includes not only expanding the area covered by an existing communication cell, but also improving the communication quality of at least part of an existing communication cell. Furthermore, "expansion of the area covered by a communication cell" includes not only expanding the area in the horizontal plane of an existing communication cell, but also expanding an existing communication cell vertically, e.g., underground or to the upper and/or lower floors of a building.

In 6G, for which efforts to develop standards have begun, the use of sub-terahertz or terahertz waves, which have even higher frequencies than the millimeter waves introduced in 5G, is envisioned, and it is expected that the straightness of radio waves will be higher and their communication distance will be shorter. Therefore, use cases are envisioned in which the IAB nodes (the name may change in 6G) and the like, which can flexibly expand communication cells, are embedded in various devices, including IoT devices, wearable devices, and mobility devices such as cars, to realize a desired communication coverage as a whole. For this reason, the present embodiment utilizing the IAB node is considered to be useful in future wireless communication standards such as 6G.

In Figure 2, the moving station MS as the IAB node comprises a communication-device functional unit 41 that functions as a communication device for the parent node including fixed base station FS and a base-station functional unit 42 that functions as a base station for a communication device 2 with which the moving station MS can communicate. In 5G, the communication-device functional unit 41 is specified as a MT (Mobile Termination) or IAB-MT, and
the base-station functional unit 42 is specified as a DU (Distributed Unit) or IAB-DU. It should be noted that, in other wireless communication systems including generations after 5G, functions similar to IAB, MT, DU, CU (Central Unit not shown) may be provided under different names, but such similar functions may be used as IAB, MT, DU, CU in the present embodiment.

One fixed base station FS are illustrated in Figure 2. The fixed base station FS provides the fixed communication cell FC. The baseband function of the fixed base station FS may be divided into a central unit (CU) on the core network (not shown) side and a distributed unit (DU) on the communication device 2 side. The distributed unit (not shown) of the fixed base station FS is provided near the radio equipment such as an antenna of the fixed base station FS, typically in the same base station facility as the radio equipment. The central unit (not shown) of the fixed base station FS is connected to the core network. The connection between the radio equipment such as an antenna in the fixed base station FS and the distributed unit, the connection between the distributed unit and the central unit, and the connection between the central unit and the core network, are typically wired by conductors and/or optical fibers and the like, although some or all of those connections may be wireless.

The communication-device functional unit 41 (IAB-MT) of the moving station MS, if the moving station MS is located within the fixed communication cell FC, can connect wirelessly with the distributed unit of the fixed base station FS. In this case, the moving station MS functions as a child node for the fixed base station FS as a parent node or an IAB donor, and expands the fixed communication cell FC by the fixed base station FS as a parent node. Then, the base-station functional unit 42 (IAB-DU) of the moving station MS provides a moving communication cell (not shown) as expanded communication cell of the fixed communication cell FC to the communication device 2. It should be noted that the moving station MS may provide an expanded communication cell of the communication cell (e.g., the satellite communication cell 132) in the fixed communication cell FC shown in the figure, with an unshown base station (e.g., the communication satellite 131) other than the fixed base station FS shown in the figure as a parent node. In other words, the parent node of the moving station MS may be any base station available in accordance with the location of the moving station MS.

The moving station MS is attached to a movable object, except when it can move (or fly) autonomously like the communications satellite 131. A movable object is any movable thing or person and includes, for example, automobiles, trains, motorcycles, bicycles, airplanes, ships, and any other vehicles. The moving station MS may be a communication device 2 used by a moving person, for example, a communication device 2 equipped with a tethering function and/or personal hotspot function. Since such a communication device 2 (moving station MS) usually functions as a wireless LAN access point, the RAT (e.g., 5G NR) used by the base station to be expanded (e.g., the fixed base station FS) and the RAT used by the expanding moving station MS may be different. The present embodiment describes an example in which a plurality of moving stations MS1 to MS3 (collectively referred to as moving stations MS if necessary) are installed to a plurality of cars C1 to C3 of a train as the movable object. Besides, as mentioned above, the parent node of each moving station MS1 to MS3 is arbitrary, but in the present example, unless otherwise specified, it is assumed that the parent node of every moving station MS1 to MS3 is the fixed base station FS shown in the figure.

In case where the plurality of moving stations MS1 to MS3 are installed to a movable object such as a train, as in the example shown in the figure, it is assumed that the communication devices 2 used by its passengers and others will communicate mainly through one of the moving stations MS1 to MS3. However, since the moving stations MS1 to MS3 sometimes move at high speeds together with the movable object, there is a risk that a stable communication environment cannot be provided inside the movable object. Therefore, the first objective of the present embodiment is to provide a communication control apparatus 3 that can provide a stable communication environment by supplementing the moving stations MS1 to MS3. Besides, there is also a risk that sufficient communication quality may not be realized depending on the movement state and the like of the movable object to which the moving stations MS1 to MS3 are installed. Therefore, the second objective of the present embodiment is to provide a communication control apparatus 3 that can realize sufficient communication quality by supplementing the moving stations MS1 to MS3.

The communication control apparatus 3 includes a movement information acquisition unit 31, a communication cell identification unit 32, a communication device movement detection unit 33, a connection control unit 34, a communication quality requirement detection unit 35, and a communication quality insufficiency estimation unit 36. Some of these functional blocks can be omitted as long as the communication control apparatus 3 realizes at least some of the operations and/or effects described below. In particular, if only one of the first objective and the second objective of the present embodiment described above is to be achieved, some of the functional blocks and their functions related to another objective can be omitted. These functional blocks are realized by the cooperation of hardware resources, such as the central processing unit, memory, input devices, output devices, and peripheral devices connected to the computer, and software that is executed using them. Regardless of the type of computer or its installation location, each of the above functional blocks may be realized with the hardware resources of a single computer, or by combining hardware resources distributed across multiple computers. Especially in the present embodiment, some or all of functional blocks of the communication control apparatus 3 may be realized in a centralized or distributed manner by computer and/or processor provided in the communication device 2, the moving station MS (including the movable object), a base station such as the fixed base station FS, and the core network (not shown) .

The movement information acquisition unit 31 acquires movement information concerning the movement of the moving station MS. In the present embodiment, since the moving stations MS1 to MS3 are installed to the cars C1 to C3 as movable objects, the movement information acquisition unit 31 may acquire movement information concerning the movement of each car C1 to C3 or the entire train as the movement information of the moving station MS. The movement information includes at least one of the following: the movement route of the moving station MS, the arrival time of the moving station MS at each location on the movement route, the traffic condition on the movement route (especially in case where the movable object is a vehicle traveling on a public road such as a bus or a car), the movement speed of the moving station MS, the movement direction of the moving station MS, and the current position of the moving station MS. Some or all of the movement information can be acquired from the train itself, the moving station MS itself, the communication devices 2 used by persons traveling in the cars C1 to C3, a movement instruction device (not shown) that remotely gives movement instruction to the train and the like. For example, the movement route, the arrival time at each location on the movement route, and the traffic condition on the movement route can be acquired from map applications or navigation applications installed in the train, the moving station MS, the communication device 2, the movement instruction device and the like. Besides, the movement speed, the movement direction, and the current position can be acquired from a positioning module such as a GPS module installed in the train, the moving station MS, the communication device 2 and the like. The movement information acquisition unit 31 may detect that the train (i.e., the moving station MS) is in a moving state or detect the moving speed based on the fact that a base station as a parent node to the moving station MS as a child node in the IAB switches as the train moves.

The communication cell identification unit 32 identifies a surrounding communication cell where the moving station MS is located. Here, the surrounding communication cell is a communication cell that can be directly connected to without the moving station MS, by a communication device 2 in the train or a communication device 2 moving along with the train (i.e., the moving station MS). As illustrated in the figure, typically the fixed communication cell FC through which the train is passing becomes a surrounding communication cell. In the following, base stations that provide such surrounding communication cells are also referred to as surrounding base stations. In the example shown in the figure, the fixed base station FS that provides the fixed communication cell FC as a surrounding communication cell is a surrounding base station, but a surrounding base station is not limited to the fixed base station FS, but can be a terrestrial base station or a non-terrestrial base station (such as the communication satellite 131) that moves differently from the train.

In the example shown in the figure, the communication cell identification unit 32 identifies the fixed communication cell FC as a surrounding communication cell around the moving station MS. For example, the communication cell identification unit 32 identifies the surrounding communication cell (the fixed communication cell FC) where the moving station MS is located, based on the movement information of the moving station MS acquired by the movement information acquisition unit 31. Specifically, the surrounding communication cell (the fixed communication cell FC) through which the moving station MS is currently passing or communication cells where the moving station MS is going to pass at a future time can be identified, by comparing the placement information and the like of each communication cell managed by the core network (not shown) or the central unit (not shown) and the like to which a base station group including the surrounding communication cell (the fixed communication cell FC) is connected, and the movement information of the moving station MS acquired by the movement information acquisition unit 31.

The communication device movement detection unit 33 detects that the communication device 2 within the surrounding communication cell (the fixed communication cell FC) moves along with the moving station MS (i.e., the train). In other words, the communication device movement detection unit 33 detects the communication device 2 in the train. The communication device movement detection unit 33 may acquire movement information of the communication device 2 in the similar way to the movement information acquisition unit 31 that acquires movement information of the moving station MS. Some or all of the movement information of the communication device 2 can be acquired from map applications or navigation applications installed to the communication device 2 itself, or a positioning module such as a GPS module installed in the communication device 2 itself. The communication device movement detection unit 33 can detect relative movement of the communication device 2 with respect to the moving station MS (i.e., the train), by comparing the movement information of the communication device 2 acquired by itself with the movement information of the moving station MS acquired by the movement information acquisition unit 31. For example, the communication device movement detection unit 33 can detect not only that the communication device 2 is in the train, but also that the communication device 2 is moving within the train (e.g., moving between the cars C1 to C3) (the two-way arrow shown behind the communication device 2 in Figure 2 symbolically represents the movement within the train).

Specifically, the communication device movement detection unit 33 (and the movement information acquisition unit 31) acquires the relative distance, the relative speed, the relative acceleration and the like between each communication device 2 and each of the moving stations MS1 to MS3 (i.e., the cars C1 to C3) to recognize whether or not each communication device 2 is moving significantly relative to each of the moving stations MS1 to MS3. For example, a communication device 2 whose relative distance to the moving station MS is substantially constant or less than a predetermined value, or a communication device 2 whose speed or acceleration relative to the moving station MS is substantially zero, can be recognized as the communication device 2 that is not moving significantly relative to the moving station MS (i.e., the communication device 2 that moves along with the moving station MS).

It should be noted that even if the communication device movement detection unit 33 (and the movement information acquisition unit 31) does not directly acquire the movement information of the communication device 2 and/or the moving station MS, it can recognize whether or not there is substantial movement of the communication device 2 relative to the moving station MS. For example, if a user of the communication device 2 checks-in using the communication device 2 and the like when boarding the train (e.g., if the communication device 2 is held or "touch" over a contactless reader provided at the boarding gate or the boarding entrance of the train) or if a boarding ticket for the train is purchased online using the communication device 2 and the like, such communication device 2 corresponding to the boarding information or the boarding record is strongly suggested not to move relative to the moving station MS (i.e., the train). Alternatively, simply based on the fact that the communication device 2 is continuously or intermittently connected to the moving station MS, the communication device 2 may be estimated to be in the train (strictly speaking, in a moving communication cell provided by the moving station MS) .

The connection control unit 34 controls the communication device 2 within a moving communication cell (not shown) provided by the moving station MS (i.e., within the train) into a state where it can be connected to any of the moving station MS and the surrounding base station (the fixed base station FS). Thus, a stable communication environment can be provided to the communication device 2 within the moving communication cell (i.e., within the train) by supplementing the moving station MS with the surrounding base station (the fixed base station FS). Therefore, the first objective of the present embodiment of providing the communication control apparatus 3 that can provide a stable communication environment by supplementing the moving stations MS1 to MS3 is achieved.

Specifically, technologies such as Dual Connectivity (DC) and Carrier Aggregation (CA) can be utilized. It should be noted that it is assumed that technology similar to DC or CA may be provided under different names in other wireless communication systems including those of generations later than 5G, but in the present embodiment, such similar technology is also referred to as DC or CA.

The connection control unit 34 utilizing DC, controls the communication device 2 within the moving communication cell into a state where it can be connected to both the moving station MS and the surrounding base station (the fixed base station FS) simultaneously. Figure 3 schematically shows an example where the communication device 2 (UE) in the train is dually connected to both the surrounding base station and the moving station MS (IAB Node 1) by DC. The surrounding base station and the moving station MS cooperate via an inter-station interface IF such as the X2 interface and the Xn interface to provide essentially one user plane function (UPF) to the communication device 2. Besides, the surrounding base station and the moving station MS are connected to the same central unit and/or core network.

Figure 4 schematically shows an example where an edge computer is installed in the train for controlling a plurality of moving stations MS1 to MS3 (IAB Node 1-3) installed to a plurality of cars C1 to C3 of the train. The edge computer is provided to realize so-called multi-access edge computing (MEC) in the train. The edge computer may execute some or all of the processes concerning the execution of DC, instead of the central unit and/or the core network. Besides, the edge computer integrally controls the plurality of moving stations MS1 to MS3 in the train and functions as the inter-station interface IF with the surrounding base station or as an interface with the central unit and/or the core network.

The connection control unit 34 utilizing CA, controls the communication device 2 within the moving communication cell into a state where it can communicate by an aggregated carrier into which a carrier of the moving station MS and a carrier of the surrounding base station (the fixed base station FS) are bundled. Regardless of whether DC or CA is utilized, the frequency band and/or the carrier handled by the moving station MS is processed by the moving station MS, and the frequency band and/or the carrier handled by the surrounding base station (the fixed base station FS) is processed by the surrounding base station (the fixed base station FS). However, as shown in Figures 3 and 4, both the moving station MS (IAB Node 1-3) and the surrounding base station are connected to the central unit and/or the core network for integrated control, so that a single and unified communication can be realized even if multiple different stations are utilized.

The above DC or CA can be implemented in any combination of moving station MS and surrounding base station, but it is preferable to implement it in the illustrated combination of the moving station MS as a child node in the IAB and the surrounding base station (the fixed base station FS) as a parent node in the IAB. In this case, since the moving station MS as a child node is directly controlled by the surrounding base station (the fixed base station FS) as a parent node, the dependency on the upper central unit or core network is reduced, and DC or CA can be efficiently realized at the level of the surrounding base station (the fixed base station FS).

As in the example shown in the figure, in case where the moving station MS is installed to the movable object such as the train, it would be desirable for the communication device 2 used by its passengers and others to communicate mainly via the moving station MS. However, the communication environment in the train may become unstable if it depends only on the moving station MS, since the train to which the moving station MS is installed may move fast, or an environment around the train may vary rapidly. Therefore, as in the present embodiment, the communication cell identification unit 32 always keeps track of surrounding communication cells (fixed communication cells FC) around the train (i.e., the moving station MS), and the connection control unit 34 ensures that the communication devices 2 in the train can utilize the communication resources (frequency band or carrier) of the surrounding base stations (fixed base stations FS) whenever necessary. This makes it possible to realize stable communication via the surrounding base station (the fixed base station FS) even when communication by the moving station MS becomes unstable.

Specifically, in case where train passenger moves between the cars C1 to C3, the communication is likely to become unstable, since the decks and the like provided at the end of each car C1 to C3 are located at the edge of each moving communication cell of each moving station MS1 to MS3. Such communication device 2 located at the edge of each moving communication cell of each moving station MS1 to MS3 can stably communicate via the surrounding base station (the fixed base station FS) without depending only on each of the unstable moving stations MS1 to MS3. Besides, in case where passengers are concentrated in a particular car C1 of the train, traffic from a large number of communication devices 2 is concentrated to the moving station MS1 installed in the car C1. Thus, by allocating at least some of the traffic of the communication devices 2 in the car C1 where sufficient throughput cannot be achieved due to the passenger concentration, to the surrounding base station (the fixed base station FS) instead of the moving station MS1, the stability of communication in the car C1 can be substantially improved.

Besides, by controlling the communication device 2 in the train into a state where it can be connected to any of the moving station MS and the surrounding base station (the fixed base station FS) by DC or CA, the situation in which the communication device 2 has to frequently transition from one of the moving station MS and the surrounding base station (the fixed base station FS) to another can be avoided. Such transitions between stations are generally accompanied by signals related to handover or signals related to changes in the tracking area (if the tracking areas to which the moving station and the surrounding base station belong are different), but the present embodiment can effectively prevent the frequent occurrence of such substantially unnecessary signals.

The connection control unit 34 may switch the communication device 2 within the moving communication cell, between a state where it can be connected only to the moving station MS and a state where it can be connected to any of the moving station MS and the surrounding base station (the fixed base station FS) by DC or CA, based on the movement information of the moving station MS (i.e., the train) acquired by the movement information acquisition unit 31.

For example, the connection control unit 34 may switch the communication device 2 within the moving communication cell: to the state where it can be connected only to the moving station MS, if the speed of the moving station MS relative to the surrounding base station (the fixed base station FS) detected based on the movement information acquired by the movement information acquisition unit 31 is greater than a predetermined speed threshold; and to the state where it can be connected to any of the moving station MS and the surrounding base station (the fixed base station FS), if the speed of the moving station MS relative to the surrounding base station (the fixed base station FS) detected based on the movement information acquired by the movement information acquisition unit 31 is less than the speed threshold.

In case where the relative speed of the moving station MS with respect to the surrounding base station (the fixed base station FS) is greater than the speed threshold, typically in case where the train to which the moving station MS is installed is moving at a very high speed, the train will pass through the surrounding communication cell (the fixed communication cell FC) provided by the surrounding base station (the fixed base station FS) in a short time. Therefore, even if the communication device 2 in the train is connected to the surrounding base station (the fixed base station FS), it must immediately reconnect to the moving station MS. To avoid such an inefficient situation, if the relative speed of the moving station MS with respect to the surrounding base station (the fixed base station FS) is greater than the speed threshold, the connection control unit 34 switches the communication device 2 within the moving communication cell to a state where it can be connected only to the moving station MS (i.e., it cannot be connected to the surrounding base station (the fixed base station FS)).

Besides, the connection control unit 34 may limit the target to the communication device 2 that has been detected by the communication device movement detection unit 33 to move along with the moving station MS (i.e., the train) within the surrounding communication cell (the fixed communication cell FC), and may control the targeted communication device 2 into a state where it can be connected to any of the moving station MS and the surrounding base station (the fixed base station FS) by DC or CA. Since the communication devices 2 that are not targets would be outside the train, there is no need for them to connect to the moving station MS that only passes by along with the train, and they can be connected to fixed base stations FS and the like as the surrounding base stations for the train.

It should be noted that the connection control unit 34 may switch the communication device 2, between a state where it can be connected only to the moving station MS and a state where it can be connected to any of the moving station MS and the surrounding base station (the fixed base station FS) by DC or CA, in accordance with the communication request or the service request of the communication device 2 detected by the communication quality requirement detection unit 35 described below. Specifically, when the communication quality requirement detection unit 35 detects high-quality communication such as emergency communication or priority communication by the communication device 2 currently connected to the moving station MS, the connection control unit 34 may switch the communication device 2 into a state where it can be connected to any of the moving station MS and the surrounding base station (the fixed base station FS) by DC or CA. Besides, the connection control unit 34 may switch the communication device 2 within the moving communication cell into a state where it can be connected only to the moving station MS, if the communication quality of the surrounding base station (the fixed base station FS) does not reach the specified required level. Furthermore, the connection control unit 34 may monitor the frequency of transitions between the moving station MS and the surrounding base station (the fixed base station FS) or between the plurality of moving stations MS1 to MS3, and may switch the communication device 2 within the moving communication cell into a state where it can be connected to any of the moving station MS and the surrounding base station (the fixed base station FS) by DC or CA in order to reduce the monitored frequency.

Next, the configuration concerning the second objective of the present embodiment will be described for providing the communication control apparatus 3 that can realize sufficient communication quality by supplementing the moving stations MS1 to MS3. The similar contents to the above configurations concerning the first objective of the present embodiment will be omitted.

The communication quality requirement detection unit 35 detects communication quality requirement from the communication device 2 currently connected to the moving station MS. The communication quality requirement includes information concerning the communication or the service requested by the communication device 2, and the required communication quality or the required service quality (QoS: Quality of Service). The information concerning QoS in 5G includes various QoS parameters specified by the 5QI (5G QoS Identifier) and the like. Examples of the QoS parameter include: bit rate guarantee, priority level, packet delay budget, packet error rate, ARP (Allocation and Retention Priority), Guaranteed Flow Bit Rate (GFBR), Maximum Flow Bit Rate (MFBR), Aggregate Maximum Bit Rate (AMBR), and maximum packet loss rate.

The 5QI defines recommended combinations of the various QoS parameters described above for typical use cases. The use cases are roughly classified into three resource types: non-guaranteed bit rate (Non-GBR), guaranteed bit rate (GBR) and delay-critical GBR. Each resource type is subdivided into several different QoS levels, a combination of recommended QoS parameters is defined for each QoS level, and a unique 5QI is set to specify such combination. For the above three resource types, the required QoS level is generally higher in the order of Non-GBR, GBR and delay-critical GBR (from the lowest to the highest).

In the following embodiment, the case is described where the communication device 2 currently connected to the moving station MS in particular requests "high quality" communication or service. Examples of high-quality communication include priority communication with high QoS requirement such as emergency communication such as emergency call, VoLTE in 4G, VoNR in 5G. Besides, the information concerning the communication quality requirement of the communication device 2 may also be acquired through the core network involved in providing various communications or services to the communication device 2, servers of service providers that provide various services to the communication device 2 on a general network such as the internet and the like.

The communication quality insufficiency estimation unit 36 estimates insufficiency of communication quality of the communication device 2 currently connected to the moving station MS. Specifically, the communication quality insufficiency estimation unit 36 may estimate the insufficiency of communication quality of the communication device 2 currently connected to the moving station MS, when high-quality communication such as emergency communication or priority communication by the communication device 2 is detected by the communication quality requirement detection unit 35. In other words, even if the communication quality by the moving station MS is stable, the communication quality may be estimated by the communication quality insufficiency estimation unit 36 to be insufficient with the moving station MS, since the communication resources of the moving station MS may not be sufficient to handle high-quality communications.

The communication quality insufficiency estimation unit 36 may estimate insufficiency of communication quality of the communication device 2 currently connected to the moving station MS, based on the movement information of the moving station MS acquired by the movement information acquisition unit 31. For example, when the train to which the moving station MS is installed moves at high speed and passes through a group of relatively small microcells (with radius of tens to hundreds of meters) and the like at high speed, base stations (providing each microcell and the like) as parent nodes to the moving station MS as a child node switches frequently. In such a case, the communication quality by the moving station MS may decrease and may not be able to meet the requirement of the communication device 2, therefore the communication quality insufficiency estimation unit 36 may estimate that the communication quality is insufficient with the moving station MS.

The communication quality insufficiency estimation unit 36 may estimate insufficiency of communication quality of the communication device 2 currently connected to the moving station MS, based on the relative movement of the communication device 2 and the moving station MS detected by the communication device movement detection unit 33 (and the movement information acquisition unit 31). In case where a plurality of moving stations MS1 to MS3 are installed in a plurality of cars C1 to C3 of the train, as in the example shown in the figure, the communication quality is likely to decrease, since the decks and the like provided at the end of each car C1 to C3 are located at the edge of each moving communication cell of each moving station MS1 to MS3. Therefore, the communication quality insufficiency estimation unit 36 estimates that communication quality is insufficient with each moving station MS1 to MS3, for the communication device 2 located at the edge of each car C1 to C3 detected by the communication device movement detection unit 33 (and the movement information acquisition unit 31). It should be noted that, since passengers in the train often move from inside the cars to the decks when talking on the phone, the communication quality insufficiency estimation unit 36 may estimate that the communication device 2 is moving to the deck and its communication quality is going to be insufficient with the moving station MS, based on the fact that a phone call concerning the communication device 2 currently connected to the moving station MS in the train is detected.

The communication quality insufficiency estimation unit 36 may estimate insufficiency of communication quality of the communication device 2 currently connected to the moving station MS, by comprehensively considering the above various perspectives, utilizing artificial intelligence/machine learning (AI/ML) function such as the NWDAF (Network Data Analytics Function) introduced in the 5GC as the core network of 5G. The NWDAF is responsible for collecting and analyzing data on the network including 5G network. Specifically, the NWDAF collects and accumulates activity history information concerning various activities performed on the network by a number of communication devices 2, the moving stations MS, the movable object such as the train and the like connected to the network, and utilizes the analysis results for traffic control on the network, for example. It should be noted that, in other wireless communication systems, including those of later generations than 5G, functions similar to the NWDAF might be provided under different names. Such similar functions may be utilized in the present embodiment instead of or in addition to the NWDAF.

The connection control unit 34 connects the communication device 2 whose communication quality with the moving station MS is estimated to be insufficient by the communication quality insufficiency estimation unit 36, to the surrounding base station (the fixed base station FS) providing the surrounding communication cell (the fixed communication cell FC). The surrounding base station to be connected to may be any base station to which the communication device 2 can directly connect around the train (i.e., the moving station MS), but it is preferably a "large" base station that provides a relatively large macro cell (over several hundred meters in radius) and the like. The "large" base station can maintain the connection with the communication device 2 even if the train moves a little, and therefore high communication quality can be realized. The "large" base station can be a terrestrial base station or a non-terrestrial base station such as the communication satellite 131.

In this way, since the communication device 2 whose communication quality is estimated to be insufficient via the moving station MS by the communication quality insufficiency estimation unit 36, is connected in advance by the connection control unit 34 to the surrounding base station (the fixed base station FS) identified by the communication cell identification unit 32, the communication device 2 can enjoy sufficient communication quality via the surrounding base station (the fixed base station FS) even in a situation where the communication quality is insufficient with the moving station MS. Therefore, the second objective of the present embodiment is achieved to provide the communication control apparatus 3 that can realize sufficient communication quality by supplementing the moving stations MS1 to MS3.

As described above, the communication control apparatus 3 according to the present embodiment can achieve the first objective of providing a stable communication environment by supplementing the moving stations MS1 to MS3 and the second objective of realizing sufficient communication quality by supplementing the moving stations MS1 to MS3.

The connection control unit 34 may be capable of switching the communication device 2 in the train between: a communication-stability priority mode in which the communication device 2 is controlled into a state where it can be connected to any of the moving station MS and the surrounding base station (the fixed base station FS) by DC or CA according to the first objective; and a communication-quality priority mode in which the communication device 2 whose communication quality is estimated to be insufficient with the moving station MS is connected only to the surrounding base station (the fixed base station FS) according to the second objective. For example, utilizing the AI/ML function such as the NWDAF, the communication-stability priority mode is preferentially applied to the communication devices 2 in the train that are estimated to prioritize communication stability, and the communication-quality priority mode is preferentially applied to the communication devices 2 in the train that are estimated to prioritize communication quality.

The present disclosure has been described above based on embodiments. It is obvious to those skilled in the art that various variations are possible in the combination of each component and/or each process in the exemplary embodiments, and that such variations are also encompassed within the scope of the present disclosure.

Although an IAB node is exemplified as a moving station MS in the above embodiment, a moving station MS may be a relay station that relays communication signals between a base station (e.g., the fixed base station FS) and a communication device 2, or a moving station MS may be a moving base station (e.g., the communication satellite 131) that can provide a moving communication cell (e.g., the satellite communication cell 132) to the communication device 2 by itself.

It should be noted that the structures, the operations, and the functions of each apparatus and/or each method described in the embodiments can be realized by hardware resources or software resources, or by the cooperation of hardware resources and software resources. As hardware resources, for example, processors, ROMs, RAMs and various integrated circuits can be used. As software resources, for example, programs such as operating systems and applications can be used.

The present disclosure may be expressed as the following items.

1. A communication control apparatus comprising at least one processor that performs:
   by a communication cell identification unit, identifying a surrounding communication cell where a moving station capable of communicating with a communication device is located;
   by a communication quality insufficiency estimation unit, estimating insufficiency of communication quality of a communication device currently connected to the moving station; and
   by a connection control unit, connecting the communication device whose communication quality is estimated to be insufficient, to a surrounding base station providing the surrounding communication cell.
2. The communication control apparatus according to item 1, wherein the communication quality insufficiency estimation unit estimates insufficiency of communication quality of a communication device, based on detection of priority communication by the communication device currently connected to the moving station.
3. The communication control apparatus according to item 1 or 2, wherein
   the at least one processor performs, by a movement information acquisition unit, acquiring movement information concerning the movement of the moving station, and wherein the communication quality insufficiency estimation unit estimates insufficiency of communication quality of a communication device currently connected to the moving station, based on the movement information.
4. The communication control apparatus according to any of items 1 to 3, wherein
   the at least one processor performs, by a communication device movement detection unit, detecting relative movement of a communication device currently connected to the moving station with respect to the moving station; and wherein the communication quality insufficiency estimation unit estimates insufficiency of communication quality of the communication device based on the relative movement.
5. The communication control apparatus according to any of items 1 to 4, wherein
   the moving station is capable of communicating with the surrounding base station to expand the surrounding communication cell.
6. The communication control apparatus according to any of items 1 to 5, wherein the moving station comprises a communication-device functional unit that functions as a communication device to the surrounding base station, and a base-station functional unit that functions as a base station to a communication device with which the moving station can communicate.
7. The communication control apparatus according to item 6, wherein
   the moving station is an IAB (Integrated Access and Backhaul) node,
   the communication-device functional unit is a MT (Mobile Termination), and
   the base-station functional unit is a DU (Distributed Unit).
8. The communication control apparatus according to any of items 1 to 7, wherein the moving station is installed to a movable object.
9. The communication control apparatus according to any of items 1 to 8, wherein the connection control unit is capable of switching the communication device whose communication quality is estimated to be insufficient, between a communication-quality priority mode in which the communication device is connected to the surrounding base station, and a communication-stability priority mode in which the communication device is controlled into a state where it can be connected to any of the moving station and the surrounding base station.
10. The communication control apparatus according to item 9, wherein the connection control unit controls, in the communication-stability priority mode, the communication device currently connected to the moving station into a state where it can be connected to both the moving station and the surrounding base station simultaneously.
11. The communication control apparatus according to item 9 or 10, wherein the connection control unit controls, in the communication-stability priority mode, the communication device currently connected to the moving station into a state where it can communicate by an aggregated carrier into which a carrier of the moving station and a carrier of the surrounding base station are bundled.
12. A communication control method comprising:
   identifying a surrounding communication cell where a moving station capable of communicating with a communication device is located;
   estimating insufficiency of communication quality of a communication device currently connected to the moving station; and
   connecting the communication device whose communication quality is estimated to be insufficient, to a surrounding base station providing the surrounding communication cell.
13. A computer-readable medium storing a communication control program causing a computer to perform:
   identifying a surrounding communication cell where a moving station capable of communicating with a communication device is located;
   estimating insufficiency of communication quality of a communication device currently connected to the moving station; and
   connecting the communication device whose communication quality is estimated to be insufficient, to a surrounding base station providing the surrounding communication cell.
14. A communication control apparatus comprising at least one processor that performs:
   by a communication cell identification unit, identifying a surrounding communication cell where a moving station capable of communicating with a communication device is located; and
   by a connection control unit, controlling a communication device within a moving communication cell provided by the moving station into a state where it can be connected to any of the moving station and a surrounding base station providing the surrounding communication cell.
15. The communication control apparatus according to item 14, wherein the connection control unit controls the communication device within the moving communication cell into a state where it can be connected to both the moving station and the surrounding base station simultaneously.
16. The communication control apparatus according to item 14 or 15, wherein the connection control unit controls the communication device within the moving communication cell into a state where it can communicate by an aggregated carrier into which a carrier of the moving station and a carrier of the surrounding base station are bundled.
17. The communication control apparatus according to any of items 14 to 16, wherein
   the at least one processor performs, by a movement information acquisition unit, acquiring movement information concerning the movement of the moving station, and wherein the communication cell identification unit identifies the surrounding communication cell where the moving station is located based on the movement information.
18. The communication control apparatus according to any of items 14 to 17, wherein
   the at least one processor performs, by a movement information acquisition unit, acquiring movement information concerning the movement of the moving station, and wherein the connection control unit switches the communication device within the moving communication cell, between a state where it can be connected only to the moving station and a state where it can be connected to any of the moving station and the surrounding base station, based on the movement information.
19. The communication control apparatus according to item 18, wherein
   the connection control unit switches the communication device within the moving communication cell:
   to the state where it can be connected only to the moving station, if the speed of the moving station relative to the surrounding base station detected based on the movement information is greater than a predetermined speed threshold; and
   to the state where it can be connected to any of the moving station and the surrounding base station, if the speed of the moving station relative to the surrounding base station detected based on the movement information is less than the speed threshold.
20. The communication control apparatus according to any of items 14 to 19, wherein
   the at least one processor performs, by a communication device movement detection unit, detecting that the communication device within the surrounding communication cell moves along with the moving station, and wherein the connection control unit controls the communication device detected to move along with the moving station within the surrounding communication cell into a state where it can be connected to any of the moving station and the surrounding base station.
21. The communication control apparatus according to any of items 14 to 20, wherein the moving station is capable of communicating with the surrounding base station to expand the surrounding communication cell.
22. The communication control apparatus according to any of items 14 to 21, wherein the moving station comprises a communication-device functional unit that functions as a communication device to the surrounding base station, and a base-station functional unit that functions as a base station to a communication device with which the moving station can communicate.
23. The communication control apparatus according to item 22, wherein
   the moving station is an IAB (Integrated Access and Backhaul) node,
   the communication-device functional unit is a MT (Mobile Termination), and
   the base-station functional unit is a DU (Distributed Unit).
24. The communication control apparatus according to any of items 14 to 23, wherein the moving station is installed to a movable object.
25. A communication control method comprising:
   identifying a surrounding communication cell where a moving station capable of communicating with a communication device is located; and
   controlling a communication device within a moving communication cell provided by the moving station into a state where it can be connected to any of the moving station and a surrounding base station providing the surrounding communication cell.
26. A computer-readable medium storing a communication control program causing a computer to perform:
   identifying a surrounding communication cell where a moving station capable of communicating with a communication device is located; and
   controlling a communication device within a moving communication cell provided by the moving station into a state where it can be connected to any of the moving station and a surrounding base station providing the surrounding communication cell.

The present disclosure relates to connection control for moving station and surrounding base station.

1 wireless communication system, 2 communication device, 3 communication control apparatus, 11 5G wireless communication system, 12 4G wireless communication system, 13 satellite communication system, 31 movement information acquisition unit, 32 communication cell identification unit, 33 communication device movement detection unit, 34 connection control unit, 35 communication quality requirement detection unit, 36 communication quality insufficiency estimation unit, 41 communication-device functional unit, 42 base-station functional unit, 111 5G base station, 112 5G cell, 121 4G base station, 122 4G cell, 131 communication satellite, 132 satellite communication cell, 133 gateway, MS moving station.

## Claims

1. A communication control apparatus comprising at least one processor that performs:
by a communication cell identification unit, identifying a surrounding communication cell where a moving station capable of communicating with a communication device is located;
by a communication quality insufficiency estimation unit, estimating insufficiency of communication quality of a communication device currently connected to the moving station; and
by a connection control unit, connecting the communication device whose communication quality is estimated to be insufficient, to a surrounding base station providing the surrounding communication cell.

2. The communication control apparatus according to claim 1, wherein the communication quality insufficiency estimation unit estimates insufficiency of communication quality of a communication device, based on detection of priority communication by the communication device currently connected to the moving station.

3. The communication control apparatus according to claim 1, wherein
the at least one processor performs, by a movement information acquisition unit, acquiring movement information concerning the movement of the moving station, and wherein
the communication quality insufficiency estimation unit estimates insufficiency of communication quality of a communication device currently connected to the moving station, based on the movement information.

4. The communication control apparatus according to claim 1, wherein
the at least one processor performs, by a communication device movement detection unit, detecting relative movement of a communication device currently connected to the moving station with respect to the moving station; and wherein
the communication quality insufficiency estimation unit estimates insufficiency of communication quality of the communication device based on the relative movement.

5. The communication control apparatus according to claim 1, wherein
the moving station is capable of communicating with the surrounding base station to expand the surrounding communication cell.

6. The communication control apparatus according to claim 1, wherein the moving station comprises a communication-device functional unit that functions as a communication device to the surrounding base station, and a base-station functional unit that functions as a base station to a communication device with which the moving station can communicate.

7. The communication control apparatus according to claim 6, wherein
the moving station is an IAB (Integrated Access and Backhaul) node,
the communication-device functional unit is a MT (Mobile Termination), and
the base-station functional unit is a DU (Distributed Unit).

8. The communication control apparatus according to claim 1, wherein the moving station is installed to a movable object.

9. The communication control apparatus according to claim 1, wherein the connection control unit is capable of switching the communication device whose communication quality is estimated to be insufficient, between a communication-quality priority mode in which the communication device is connected to the surrounding base station, and a communication-stability priority mode in which the communication device is controlled into a state where it can be connected to any of the moving station and the surrounding base station.

10. The communication control apparatus according to claim 9, wherein the connection control unit controls, in the communication-stability priority mode, the communication device currently connected to the moving station into a state where it can be connected to both the moving station and the surrounding base station simultaneously.

11. The communication control apparatus according to claim 9, wherein the connection control unit controls, in the communication-stability priority mode, the communication device currently connected to the moving station into a state where it can communicate by an aggregated carrier into which a carrier of the moving station and a carrier of the surrounding base station are bundled.

12. A communication control method comprising:
identifying a surrounding communication cell where a moving station capable of communicating with a communication device is located;
estimating insufficiency of communication quality of a communication device currently connected to the moving station; and
connecting the communication device whose communication quality is estimated to be insufficient, to a surrounding base station providing the surrounding communication cell.

13. A computer-readable medium storing a communication control program causing a computer to perform:
identifying a surrounding communication cell where a moving station capable of communicating with a communication device is located;
estimating insufficiency of communication quality of a communication device currently connected to the moving station; and
connecting the communication device whose communication quality is estimated to be insufficient, to a surrounding base station providing the surrounding communication cell.
